# EUROPEAN PATENT APPLICATION

(11) **EP 4 651 113 A1**
(43) Date of publication of application: **19.11.2025**
(21) Application number: 25155724.5
(22) Date of filing: 04.02.2025
(51) Int. Cl.: G07G 3/00, G06Q 20/20, A47F 9/04, G07C 9/00, G07G 1/00, G07G 1/14

(54) **TRANSACTION PROCESSING SYSTEM**

(30) Priority: 17.05.2024 JP 2024081251
(71) Applicant: Toshiba TEC Kabushiki Kaisha, Tokyo 141-8562 (JP)
(72) Inventor: Katsumata, Hiroyuki, Tokyo 141-8562 (JP)
(74) Representative: Bandpay & Greuter

(57) **Abstract**

According to one embodiment, a transaction processing system includes a point-of-sale apparatus to process the registration of items in a sales transaction at a store, a monitoring system to detect fraud acts in the sales transaction, and a gate device on an exit lane on which a customer passes after finishing the sales transaction. The transaction data generated for the sales transaction indicates whether fraud has been detected in the sales transaction. The gate device identifies the sales transaction of the customer about to pass through the exit lane, determines whether the transaction data indicates that at least one fraud act has been detected in the sales transaction, and causes an alarm notification to be output when the transaction data indicates at least one fraud act in the sales transaction has been detected.

## Description

### FIELD

Embodiments described herein relate generally to a transaction processing system for retail stores and the like.

### BACKGROUND

Various transaction processing systems in which a customer performs at least a part of the processing related to completing a commodity transaction in a store are known. There full self-service POS (point-of-sale) systems, semi self-service POS systems, and a selling floor mobile type self-service register systems using a cart terminal or a customer's smartphone.

In these transaction processing systems, if the customer makes a mistake in the processing, the transaction sometimes cannot be correctly processed. Thus, generally, actions of the customer operating these systems are monitored and, if a mistake or fraudulent-type action is detected, transaction processing can be suspended so a store clerk may be notified to take appropriate measures.

However, it is sometimes very difficult or burdensome for the clerk to have to take measures every time a fraudulent action is detected.

It would be desirable for improved transaction processing systems to reduce the burden on the clerk handling or monitoring potentially fraudulent actions of the customers using such systems.

### DISCLOSURE OF INVENTION

To this end, there is provided a transaction processing system according to claim 1. There is also provided a gate device for the transaction processing system according to claim 13. Preferred embodiments are set out in the dependent claims.

### BRIEF DESCRIPTION OF THE DRAWINGS

FIG. 1 is an overall configuration diagram of a transaction processing system according to an embodiment.
FIG. 2 is a block diagram of a POS terminal.
FIG. 3 is a block diagram of an action monitoring system and a monitoring device.
FIG. 4 is a block diagram of a POS server.
FIG. 5 is a block diagram of a gate device.
FIG. 6 is a perspective view of a gate device.
FIG. 7 is a block diagram of an attendant terminal.
FIG. 8 is a flowchart of transaction processing.
FIG. 9 is a flowchart of gate control processing.
FIG. 10 is a flowchart of alarm processing.
FIG. 11 is a diagram illustrating an example of a calling screen.
FIG. 12 is a diagram illustrating an example of a warning screen.
FIG. 13 is a flowchart of passage permission processing.
FIG. 14 is a diagram illustrating an example of a first guidance screen.
FIG. 15 is a diagram illustrating an example of a second guidance screen.
FIG. 16 is a flowchart of erroneous passage processing.

### DETAILED DESCRIPTION

An object of embodiments is to provide an improved transaction processing system that can reduce a burden on clerks in charge of handling fraudulent actions of customers.

According to one embodiment, a transaction processing system includes a point-of-sale apparatus configured to process the registration of items in a sales transaction of a customer at a store; a monitoring system configured to detect fraud acts of the customer in the sales transaction; and a gate device on an exit lane on which a customer passes after finishing the sales transaction in a store. The transaction data generated for the sales transaction indicates whether the monitoring system has detected a fraud act of the customer in the sales transaction. The gate device is configured to identify the sales transaction of the customer about to pass through the exit lane, determine whether the transaction data indicates that the monitoring system has detected at least one fraud act in the identified sales transaction, and cause an alarm notification to be output when the transaction data indicates the monitoring system has detected at least one fraud act in the identified sales transaction.

A transaction processing system that performs processing of a transaction related to commodity sales to a customer in a store is explained with reference to the drawings. In other examples, the transaction to be processed may be different from commodity sales such as one related to the provision of a service or the like. It is assumed that the customer is permitted to exit the store after completing settlement for the transaction.

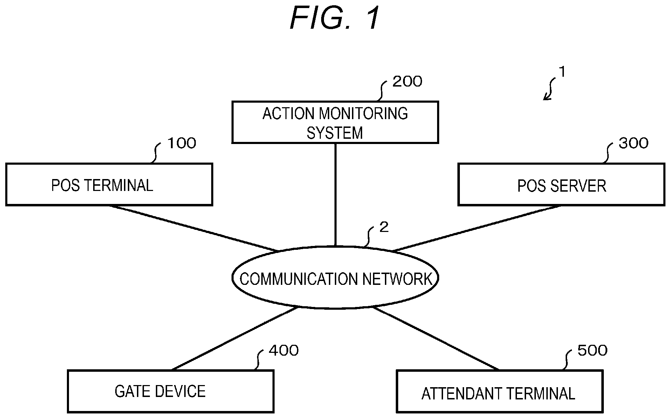

FIG. 1 is an overall configuration diagram of a transaction processing system 1 according to an embodiment.

The transaction processing system 1 includes a POS (point-of- sale) terminal 100 (corresponding to point-of-sale apparatus), an action monitoring system 200, a POS server 300, a gate device 400, and an attendant terminal 500. In the transaction processing system 1, the POS terminal 100, the action monitoring system 200, the POS server 300, the gate device 400, and the attendant terminal 500 are connected and communicate with other via a communication network 2.

In FIG. 1, one POS terminal 100, one action monitoring system 200, one POS server 300, one gate device 400, and one attendant terminal 500 are illustrated. However, the numbers of POS terminals 100, action monitoring systems 200, POS servers 300, gate devices 400, and attendant terminals 500 can be any number of one or more.

As the communication network 2, the Internet, a VPN (virtual private network), a LAN (local area network), a public communication network, a mobile communication network, and the like can be used independently or in combination as appropriate. As the communication network 2, as an example, a LAN is used.

The POS terminal 100 is an information processing device that performs the processing for registering commodities to be purchased by a customer and the processing for settling (paying) the price (transaction amount) of the transaction. The POS terminal 100 is an example of a transaction processing device. In this example, the POS terminal 100 can be a self-service type terminal with which the customer primarily performs the registration and settlement operations.

The action monitoring system 200 monitors the actions of the customer while operating the POS terminal 100. The action monitoring system 200 detects potentially fraudulent actions of the customer in the operations at the POS terminal 100. Upon detecting a fraudulent action of a customer, the action monitoring system 200 sends a fraud detection notice to the POS terminal 100 being operated by the customer.

The POS server 300 is an information processing device for managing the transactions processed by the POS terminal(s) 100. The POS server 300 is an example of a transaction management device.

The gate device 400 controls the exit by which the customer leaves from the store.

The attendant terminal 500 is an information processing device that performs information processing for supporting a store clerk in charge for monitoring actions of the customers.

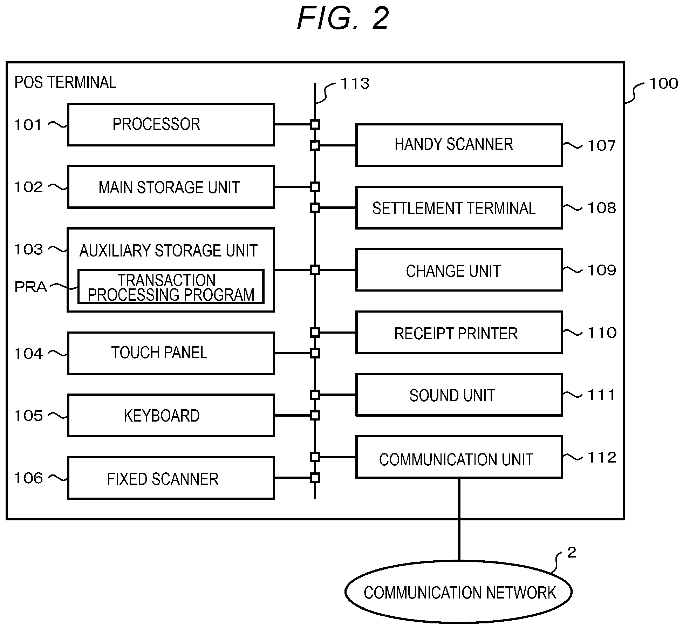

FIG. 2 is a block diagram illustrating a configuration of the POS terminal 100.

The POS terminal 100 includes a processor 101, a main storage unit 102, an auxiliary storage unit 103, a touch panel 104, a keyboard 105, a fixed scanner 106, a handy scanner 107, a settlement terminal 108, a change unit 109, a receipt printer 110, a sound unit 111, a communication unit 112, and a transmission line 113.

The processor 101, the main storage unit 102, and the auxiliary storage unit 103 are connected by the transmission line 113 to configure a computer that performs information processing for controlling the POS terminal 100.

The processor 101 executes, according to information processing programs, such as an operating system and an application program, information processing for controlling the units in order to implement various functions of the POS terminal 100.

The main storage unit 102 includes a read-only memory region and a rewritable memory region. The main storage unit 102 stores a part of the information processing programs in the read-only memory region. The main storage unit 102 sometimes stores, in the read-only memory region or the rewritable memory region, data necessary for the processor 101 in executing processing for controlling the units. The main storage unit 102 uses the rewritable memory region as a work area by the processor 101.

As the auxiliary storage unit 103, for example, an EEPROM (electric erasable programmable read-only memory), a HDD (hard disc drive), an SSD (solid-state drive), and other known various storage devices can be used. The auxiliary storage unit 103 stores data used by the processor 101 in performing various kinds of processing and the data generated by the processing. The auxiliary storage unit 103 sometimes stores the information processing programs described above. In the present embodiment, the auxiliary storage unit 103 stores a transaction processing program PRA as one of the information processing programs. The transaction processing program PRA is an application program providing algorithmic instructions for the procedures of transaction processing explained below for an embodiment.

The touch panel 104 displays a screen for information presentation to an operator of the POS terminal 100. An instruction by touch operation on a screen is input via the touch panel 104. The operator of the POS terminal 100 is typically a customer. However, a store clerk may sometimes be the operator of the POS terminal 100.

The keyboard 105 includes a large number of hard keys. By pressing of the hard keys an operator (user) instruction is input to the keyboard 105.

The fixed scanner 106 images a commodity held in front of a reading window and then recognizes, with image processing, barcode information or the like encoded in a barcode attached to the commodity. The fixed scanner 106 outputs the barcode information to the processor 101. The fixed scanner 106, can be an optically reading barcode reader using reflection of laser light to read barcodes. In other examples, fixed scanner 106 may recognize commodities in images by using an object recognition technique.

The handy scanner 107 (handheld scanner) is held by a hand of the operator and used to optically read a barcode facing a reading port of the handy scanner 107. The handy scanner 107 outputs barcode information to the processor 101.

The settlement terminal 108 reads data recorded on a settlement card such as a credit card, a prepaid card, or an electronic money card. The settlement terminal 108 may also write data to the settlement card in some cases.

The change unit 109 stores coins deposited from a coin depositing port in a storage on the inside while counting an amount of the coins. The change unit 109 discharges coins stored in the storage to a coin tray via a coin discharging port. The change unit 109 stores bills deposited from a bill depositing port in a storage on the inside while counting an amount of the bills. The change unit 109 discharges bills stored in the storage from a bill discharging port. The bill discharging port holds the discharged bills in a state of being partially exposed to the outside.

The receipt printer 110 prints receipts, vouchers, coupons, a memo receipts, and sales slips on receipt paper. The receipt printer 110 discharges the printed receipts and the like to the outside from a receipt discharging port.

The sound unit 111 outputs sounds including speech associated with various kinds of operator guidance and alarms. As the sound unit 111, various sound devices such as a sound synthesizing device or a buzzer can be used independently or in combination.

The communication unit 112 executes communication processing for performing data communication via the communication network 2. As the communication unit 112, for example, an existing wired communication device for LAN can be used. Note that, as the communication unit 112, a wireless communication device connected to the communication network 2 by wireless communication may be used instead of or in addition to the wired communication device.

The transmission line 113 includes an address bus, a data bus, and a control signal line and transmits data and control signals exchanged among the units connected thereto.

The basic hardware of the POS terminal 100 can be similar to that of an existing type of POS terminal. The POS terminal 100 can be transferred with the transaction processing program PRA already stored in the auxiliary storage unit 103 or the transaction processing program PRA can be transferred separately from the hardware. The transaction processing program PRA may be written into the auxiliary storage unit 103 according to operation of any worker. A similar or existing transaction processing program already stored in the auxiliary storage unit 103 may be updated or otherwise modified to correspond to transaction processing program PRA. A similar or existing transaction processing program already stored in the auxiliary storage unit 103 may be overwritten by transaction processing program PRA. The transaction processing program PRA can be transferred in a removable recording medium such as a magnetic disk, a magneto-optical disk, an optical disk, or a semiconductor memory or by communication via a network. The transaction processing program PRA may also or instead be stored in the main storage unit 102.

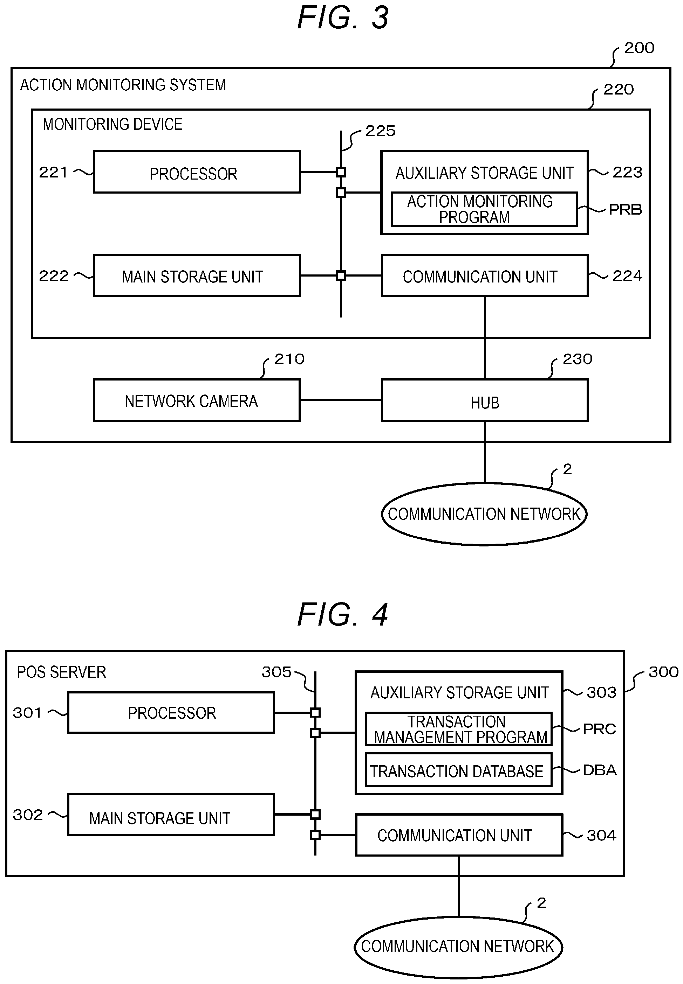

FIG. 3 is a block diagram illustrating a schematic configuration of the action monitoring system 200 and a monitoring device 220.

The action monitoring system 200 includes a camera 210, a monitoring device 220, and a hub 230.

The camera 210 can be attached to, for example, the ceiling to image the surroundings of the POS terminal 100. The camera 210 photographs the operator (e.g., customer) operating the POS terminal 100 and sends video data or the like to the monitoring device 220 via the hub 230. As the camera 210, it is assumed that an existing type of networkable camera having a function of transmitting video data via a network is used.

The monitoring device 220 acquires, via the hub 230, the video data output from the camera 210 and monitors the operator at the POS terminal 100.

The hub 230 communicably connects the camera 210 and the monitoring device 220 and connects the monitoring device 220 to the communication network 2. Note that, as the hub 230, an existing type of PoE (power over Ethernet) hub can be used.

The monitoring device 220 includes a processor 221, a main storage unit 222, an auxiliary storage unit 223, a communication unit 224, and a transmission line 225.

In general, the basic functions of the processor 221, the main storage unit 222, the auxiliary storage unit 223, the communication unit 224, and the transmission line 225 are equivalent to those described for the processor 101, the main storage unit 102, the auxiliary storage unit 103, the communication unit 112, and the transmission line 113.

However, the auxiliary storage unit 223 stores an action monitoring program PRB instead of the transaction processing program PRA. The action monitoring program PRB is an application program providing instructions for a procedure of information processing performed by the processor 221 for monitoring an action of a customer in video (or moving image) data obtained by the camera 210. The action monitoring program PRB and/or the procedure may incorporate a large-scale language model (LLM) or the like.

FIG. 4 is a block diagram illustrating a configuration of the POS server 300.

The POS server 300 includes a processor 301, a main storage unit 302, an auxiliary storage unit 303, a communication unit 304, and a transmission line 305.

In general, the basic functions of the processor 301, the main storage unit 302, the auxiliary storage unit 303, the communication unit 304, and the transmission line 305 are equivalent to those described for the processor 101, the main storage unit 102, the auxiliary storage unit 103, the communication unit 112, and the transmission line 113.

However, the auxiliary storage unit 303 stores a transaction management program PRC instead of the transaction processing program PRA. The transaction management program PRC is an application program providing instructions of a procedure of information processing by the processor 301 for managing information related to a transaction processed in the transaction processing system 1. A part of a storage region of the auxiliary storage unit 303 is used to store a transaction database DBA. The transaction database DBA is a database in which transaction data representing content of settled transactions is accumulated.

As basic hardware of the POS server 300, for example, a general-purpose server type device can be used. The hardware of the POS server 300 can be transferred with or without the transaction management program PRC stored in the auxiliary storage unit 303. The transaction management program PRC can be transferred separately or the like. The transaction management program PRC can be recorded in a removable recording medium such as a magnetic disk, a magneto-optical disk, an optical disk, or a semiconductor memory or transferred to an end user by communication via a network. The transaction management program PRC may also or instead be stored in the main storage unit 302.

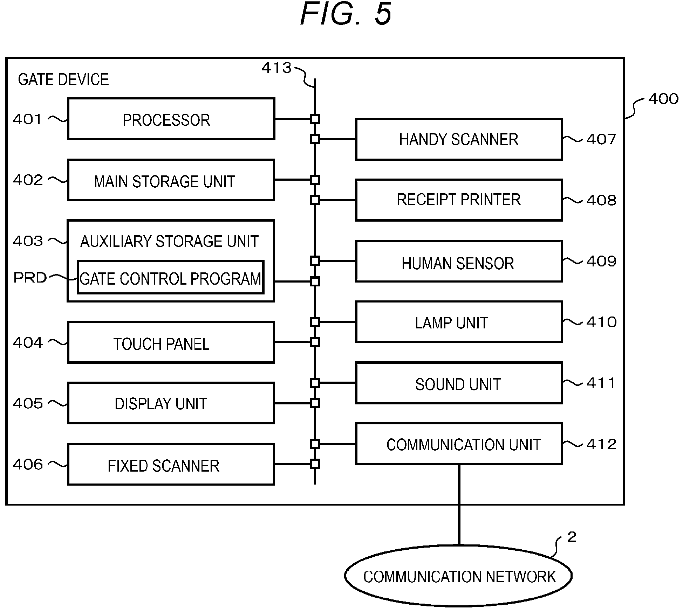

FIG. 5 is a block diagram illustrating a configuration of the gate device 400.

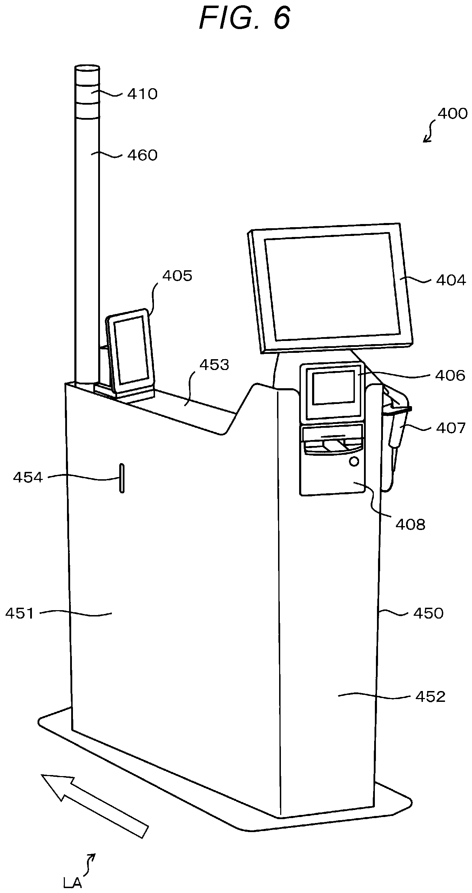

FIG. 6 is a perspective view illustrating an exterior of the gate device 400.

Note that, in FIGS. 5 and 6, the corresponding elements are denoted by the same reference symbols. In the following explanation of FIG. 6, the lefthand side and the righthand side of the gate device as depicted in FIG. 6 can be respectively referred to as the front side and the rear side.

As illustrated in FIG. 6, the gate device 400 is installed to one side of a checkout lane LA provided to control or direct movement of a customer in the moving direction indicated by the schematic arrow in the checkout lane LA.

As illustrated in FIG. 5, the gate device 400 includes a processor 401, a main storage unit 402, an auxiliary storage unit 403, a touch panel 404, a display unit 405, a fixed scanner 406, a handy scanner 407, a receipt printer 408, a human sensor 409, a lamp unit 410, a sound unit 411, a communication unit 412, and a transmission line 413.

In general, the basic functions of the processor 401, the main storage unit 402, the auxiliary storage unit 403, the communication unit 412, and the transmission line 413 are equivalent to those described for the processor 101, the main storage unit 102, the auxiliary storage unit 103, the communication unit 112, and the transmission line 113. However, the auxiliary storage unit 403 stores a gate control program PRD instead of the transaction processing program PRA. The gate control program PRD is an application program describing instructions of a procedure of information processing of the processor 401 for gate control processing.

The touch panel 404 displays a screen for information presentation to an operator. The operator provides an instruction by touching the screen of the touch panel 404. Note that the operator of the gate device 400 is usually a customer. However, a store clerk may sometimes be the operator of the gate device 400.

The display unit 405 displays a screen for information presentation to a customer about to pass through the checkout lane LA.

The fixed scanner 406 includes a reading window. The fixed scanner 406 recognizes, with image processing, a barcode on an item held in front of the reading window. The fixed scanner 406 outputs the barcode information to the processor 401. The fixed scanner 406 can optically read a barcode using reflection of laser light instead. In other examples, the fixed scanner 406 may recognize commodities by an object recognition technique.

The handy scanner 407 is used to optically reads a barcode facing a reading port. The handy scanner 407 outputs barcode information to the processor 401.

The receipt printer 408 prints a receipt, voucher, a handwritten receipt, and/or a sales slip on receipt paper. The receipt printer 408 discharges the receipt paper from a receipt discharging port.

The human sensor 409 detects a person passing through the checkout lane LA. As the human sensor 409, a detection device such as an optical sensor or an infrared sensor can be used as appropriate.

The lamp unit 410 displays a permission state of the customer to pass through the checkout lane LA.

The sound unit 411 outputs guidance and alarms related to the customer passing through the checkout lane LA. As the sound unit 411, various sound devices such as a sound synthesizing device and a buzzer can be used independently or in combination.

The gate device 400 can be provided with the gate control program PRD is already stored in the auxiliary storage unit 403. However, in some examples, the gate control program PRD may be provided after transfer of the gate device hardware or with a different application program of the same type or a different version stored in the auxiliary storage unit 403. That is, the gate control program PRD may be separately transferred from the hardware. The gate device 400 may be provided by the gate control program PRD being written in the auxiliary storage unit 403 according to operation of any worker. Transfer of the gate control program PRD may be performed by being recorded in a removable recording medium such as a magnetic disk, a magneto-optical disk, an optical disk, or a semiconductor memory or by communication via a network. The gate control program PRD may be stored in the main storage unit 402 instead of the auxiliary storage unit 403.

As illustrated in FIG. 6, the gate device 400 includes a housing 450 formed in a substantially parallelepiped shape. The side surface facing toward a customer approaching in the housing 450 is referred to as front surface 452.

The housing 450 holds the fixed scanner 406 for reading a barcode presented by the customer from the front surface 452 side. The housing 450 holds the display unit 405 in a posture near the exit end of the upper surface 453 to permit a customer about to pass on the checkout lane LA to see the display unit 405. The housing 450 holds, below the fixed scanner 406, the receipt printer 408 for discharging a receipt towards the front surface 452 side.

The touch panel 404 is attached above the fixed scanner 406 in a posture of making it easy to view a display surface from a customer facing the front surface 452. The handy scanner 407 is connected via a cable to the transmission line 413 provided on the inside of the housing 450 and can be drawn out used as need. Note that, in FIG. 6, the handy scanner 407 is depicted as set in a holder. The human sensor 409 is provided on the inside of the housing 450 at a slit 454 formed in the side surface 451. The human sensor 409 can detect a human passing through the checkout lane LA. The lamp unit 410 is attached to a pole 460 erected on the upper surface 453 of the housing 450.

Note that the processor 401, the main storage unit 402, the auxiliary storage unit 403, the sound unit 411, and the communication unit 412 illustrated in FIG. 5 are provided on the inside of the housing 450.

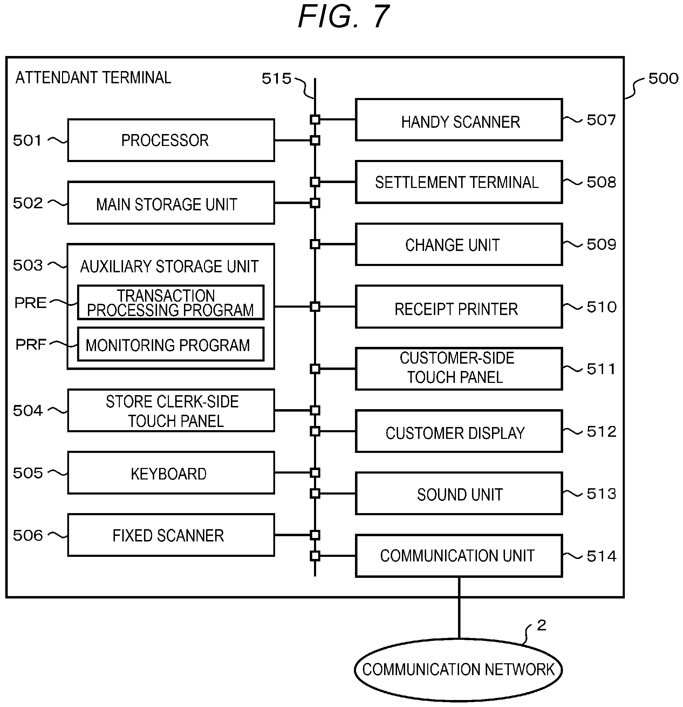

FIG. 7 is a block diagram illustrating a configuration of the attendant terminal 500.

The attendant terminal 500 includes a processor 501, a main storage unit 502, an auxiliary storage unit 503, a store clerk-side touch panel 504, a keyboard 505, a fixed scanner 506, a handy scanner 507, a settlement terminal 508, a change unit 509, a receipt printer 510, a customer-side touch panel 511, a customer display 512, a sound unit 513, a communication unit 514, and a transmission line 515.

In general, the basic functions of the processor 501, the main storage unit 502, the auxiliary storage unit 503, the communication unit 514, and the transmission line 515 are equivalent to those of the processor 101, the main storage unit 102, the auxiliary storage unit 103, the communication unit 112, and the transmission line 113. Similarly, the basic functions of the keyboard 505, the fixed scanner 506, the handy scanner 507, the settlement terminal 508, the change unit 509, the receipt printer 510, and the sound unit 513 are equivalent to those of the keyboard 105, the fixed scanner 106, the handy scanner 107, the settlement terminal 108, the change unit 109, the receipt printer 110, and the sound unit 111.

However, the keyboard 505 includes a large number of hard keys facing towards a standing position of a store clerk who operates the attendant terminal 500 (hereinafter referred to as store clerk side) to facilitate operation by the store clerk. The fixed scanner 506 is provided with a reading window directed to the store clerk side. The handy scanner 507 can be operated by a hand of the store clerk.

The store clerk-side touch panel 504 is directed to the store clerk side. The store clerk-side touch panel 504 displays a screen for information presentation to the store clerk. An instruction by touch operation on a screen by the store clerk is input to the store clerk-side touch panel 504.

The customer-side touch panel 511 is directed to the side of a standing position of a customer (hereinafter referred to as customer side) at the time when some processing by operation of the store clerk is performed. The customer-side touch panel 511 displays a screen for information presentation to the customer. The customer touches a screen to operate the customer-side touch panel 511.

The customer display 512 is directed to the customer side. The customer display 512 displays a screen for information presentation to the customer. The customer display 512 is mainly adapted to display of a character string and displays a screen simpler than the screen of the customer-side touch panel 511.

As a basic hardware of the attendant terminal 500, an existing POS terminal of a full self-service type can be used. Note that the auxiliary storage unit 503 stores a transaction processing program PRE instead of the transaction processing program PRA and separately stores a monitoring program PRF. The transaction processing program PRE is an application program mainly describing a procedure of information processing for processing a transaction according to operation of a store clerk. The monitoring program PRF is an application program describing a procedure of information processing for supporting a store clerk who monitors fraudulent passage on the checkout lane LA. Accordingly, the attendant terminal 500 is a device obtained by adding a monitoring support function to a general POS terminal. However, the attendant terminal 500 need not include a transaction processing function included in a general POS terminal. In this case, as basic hardware of the attendant terminal 500, general-purpose computer devices of various types such as a desktop type, a laptop type, or a tablet type can be used.

The attendant terminal 500 can be provided with the transaction processing program PRE and the monitoring program PRF already stored in the auxiliary storage unit 503. However, transaction processing program PRE and/or the monitoring program PRF can be transferred separately from the hardware and loaded in the auxiliary storage unit 403 subsequently. Similarly, a system including an application program of the same type but different version may be stored in the auxiliary storage unit 503 and then updated to the transaction processing program PRE or the monitoring program PRF. Transfer of the transaction processing program PRE and the monitoring program PRF can be performed by being recorded in a removable recording medium such as a magnetic disk, a magneto-optical disk, an optical disk, or a semiconductor memory or by communication via a network. The transaction processing program PRE and the monitoring program PRF may be stored in the main storage unit 402.

An operation of the transaction processing system 1 will be explained. Note that specific details of various processing explained below are examples. It is possible to, for example, change the order of a part of the processing, omit a part of the processing, or add additional processing as appropriate. In the following explanation, explanation about certain aspects of processing may be omitted to more clearly explain a characteristic operation of the present embodiment. For example, when some error has occurred, the processing for coping with such an error may be performed. However, specific description of such error handling may be omitted when the appropriate operation(s) would be readily apparent.

In general, a customer walks around a selling floor and picks up commodities to be purchased. Upon finishing selecting all commodities to be purchased, the customer moves to a checkout region. The customer selects a POS terminal 100 not presently in use by another customer and performs operations for registering the selected items as a transaction commodity to be purchased. The operation performed by the customer here is, for example, operation for scanning a barcode displayed on a commodity using the fixed scanner 106 or the handy scanner 107. The operation performed by the customer here may be, for example, operation of the touch panel 104 or the keyboard 105 for directly inputting a commodity code or may be operation of the touch panel 104 or the keyboard 105 for pressing a preset key with which the commodity is correlated in advance. In general, the operations performed by the customer here may be the same operations as performed at an existing type of POS terminal.

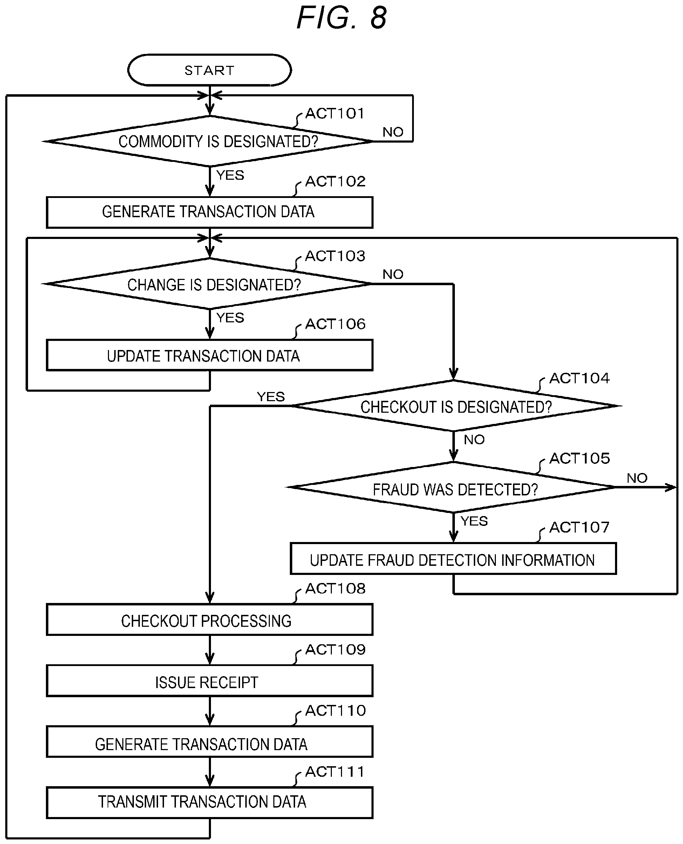

In the POS terminal 100, the processor 101 executes information processing (transaction processing) based on the transaction processing program PRA. FIG. 8 is a flowchart of the transaction processing.

In ACT 101, the processor 101 waits for a commodity being registered as a transaction commodity to be designated. When a commodity is designated, the processor 101 determines YES in ACT 101 and proceeds to ACT 102.

In ACT 102, the processor 101 generates transaction data. That is, the processor 101 determines, according to a predetermined rule, a new unique transaction code, generates transaction data including the transaction code and commodity data concerning the registered commodity, and causes the auxiliary storage unit 103 to store the transaction data. Note that the processor 101 sets, in the commodity data included in the transaction data, for example, a commodity code, a commodity name, and a unit price of the relevant commodity. Thereafter, the processor 101 proceeds to ACT 103.

In ACT 103, the processor 101 checks whether a change of the transaction commodity was designated. If not, the processor 101 determines NO and proceeds to ACT 104.

In ACT 104, the processor 101 checks whether checkout was designated. If not, the processor 101 determines NO and proceeds to ACT 105.

In ACT 105, the processor 101 checks whether a fraud action of a customer was detected. If not, the processor 101 determines NO and returns to ACT 103.

As explained above, in ACT 103 to ACT 105, the processor 101 waits for a change designation, a checkout designation, or a fraud detection to occur.

In order to set all the commodities to be purchased as transaction commodities, the customer sequentially performs predetermined operation for designating a change of the transaction commodity. Note that the change of the transaction commodity is registration of a new commodity, deletion of a registered transaction commodity, a change in the number of items concerning the registered transaction commodity. The operations performed by the customer here may be the same as operations performed at a standard POS terminal device. If the change designation was performed, the processor 101 determines YES in ACT 103 and proceeds to ACT 106.

In ACT 106, the processor 101 updates the transaction data according to the change designation. That is, for example, if operation for designating a new commodity was performed, the processor 101 adds commodity data concerning the commodity to the transaction data. For example, if operation for designating deletion was performed, the processor 101 deletes commodity data concerning a deletion target commodity from the transaction data. For example, if operation for designating a quantity change was performed, the processor 101 changes a numerical value included in the transaction data in order to represent a quantity concerning the change target commodity. Processing here may be the same as, for example, processing performed in the existing POS terminal device. Thereafter, the processor 101 retums to the waiting state in ACT 103 to ACT 105. As explained above, the processor 101 repeats ACT 106 according to the operation of the customer for designating the change to thereby change the transaction data to data representing a list of transaction commodities.

In the action monitoring system 200, an action of a customer relating to operation of the POS terminal 100 is imaged by the camera 210. In the monitoring device 220, the processor 221 detects, via information processing based on the action monitoring program PRB, a fraudulent action of the customer based on the image data sent from the camera 210. What kinds of an action of the customer the processor 221 detects as a fraudulent action may be decided as appropriate by, for example, a designer or operator of the transaction system 1 or the action monitoring system 200. For example, an action of placing an unregistered commodity in a place where generally only a registered commodity should be placed without performing the appropriate user operations for the processor 101 to determine YES in ACT 101 or ACT 103 is an example of a fraudulent action. An action of bagging a commodity that is different from a commodity that was a registered is an example of a fraudulent action. Operating the POS terminal 100 to designate a reduction in a quantity without removing any item from the registered commodity place is an example of a fraudulent action. The processor 221 executes the information processing based on the action monitoring program PRB, whereby the monitoring device 220 functions as a detecting unit.

Upon detecting a fraudulent action, the processor 221 notifies the fraudulent action to the POS terminal 100. Upon receiving the notification at the POS terminal 100, the processor 101 determines YES in ACT 105 and proceeds to ACT 107.

In ACT 107, the processor 101 updates fraud detection information. Here, as the fraud detection information, flag information indicating whether a fraudulent action was detected is used. The processor 101 changes the fraud detection information to indicate that the fraudulent action was detected. Note that, in the initial state, the processor 101 sets the fraud detection information to a state not indicating any fraudulent action has been detected. The processor 101 retums to the waiting state in ACT 103 to ACT 105 after the update.

Upon finishing registering of commodities to be purchased, the customer performs, with the touch panel 104, the keyboard 105, or the like, an operation for designating a checkout request. In response to the operation, the processor 101 determines YES in ACT 104 and proceeds to ACT 108.

In ACT 108, the processor 101 performs checkout processing for accounting and settlement of the amount due according to transaction content represented in the transaction data. That is, the processor 301 performs accounting processing for determining a settlement amount required based on the generated transaction data. The processor 301 performs settlement processing for paying the calculated settlement amount determined as explained above. In the settlement processing, various possible settlement methods such as credit settlement, code settlement, prepaid settlement, point settlement, gift certificate settlement, and cash settlement may be usable as appropriate.

In ACT 109, the processor 101 issues a receipt. The processor 101 generates a receipt image showing content of the transaction, a checkout result, and the like along with a receipt barcode and causes the receipt printer 110 to print the receipt image. Accordingly, a paper receipt created by the receipt printer 110 is issued. The receipt barcode may be any optically readable code for representing a transaction code serving as an identifier of the transaction.

With the generation of the transaction data in ACT 102, the update of the transaction data in ACT 106, or the checkout processing in ACT 108, the processor 101 processes the transaction with the customer according to the action of the customer operating the POS terminal 100. When processor 101 executes the information processing based on the transaction processing program PRA, the processor 101 functions as a processing unit.

In ACT 110, the processor 101 generates transaction data for the present transaction. In general, the transaction data may be basically the same as transaction data provided by an existing POS system. That is, the transaction data can include a transaction header, item data, combination price-cut data, customer data, closing data, and credit data. Note that the item data is data representing a list of transaction commodities. What kinds of data are included in the transaction data may be decided as appropriate by, for example, the designer or operator of the transaction processing system 1. However, the processor 101 specifically includes fraud detection information and exit information set in a state of representing "not-exited". The processor 101 executes the information processing based on the transaction processing program PRA, whereby the POS terminal 1 functions as a generating unit.

In ACT 111, the processor 101 sends the generated transaction data to the POS server 300. Thereafter, the processor 101 returns to ACT 101 and prepares for processing of the next transaction.

Upon receiving the transaction data, in the POS server 300, the processor 301 updates the transaction database DBA to include the new transaction data. Therefore, the auxiliary storage unit 303 storing the transaction database DBA is an example of a storage unit.

The customer, having finished the checkout, leaves the checkout region through the checkout lane LA. At this time, the customer causes the fixed scanner 406 or the handy scanner 407 of the gate device 400 at the checkout lane LA to read the receipt barcode shown on the receipt that was issued by the POS terminal 100.

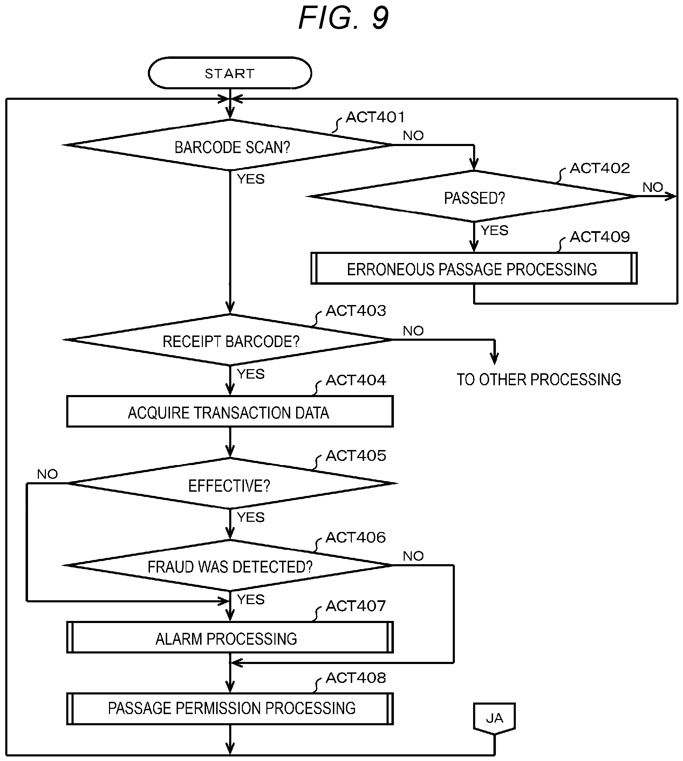

In the gate device 400, the processor 401 executes gate control processing corresponding to the gate control program PRD. FIG. 9 is a flowchart of the gate control processing.

In ACT 401, the processor 401 checks whether a barcode was scanned. If not, the processor 401 determines NO and proceeds to ACT 402.

In ACT 402, the processor 401 checks whether a human passed through the checkout lane LA. If not, the processor 401 determines NO and returns to ACT 401.

In ACT 401 and ACT 402, the processor 401 thus waits for barcode scan or passage of a human.

If a barcode is read by the fixed scanner 406 or the handy scanner 407, the processor 401 determines YES in ACT 401 and proceeds to ACT 403.

In ACT 403, the processor 401 checks whether the barcode read by the fixed scanner 406 or the handy scanner 407 is a receipt barcode. If a barcode other than the receipt barcode was read, the processor 401 determines NO and proceeds to other processing corresponding to the just read barcode. Explanation about this other processing is omitted at this point.

On the other hand, if the customer caused the fixed scanner 406 or the handy scanner 407 to read a receipt barcode, the processor 401 determines YES in ACT 403 and proceeds to ACT 404.

In ACT 404, the processor 401 acquires, from the POS server 300, transaction data for the transaction matching the transaction code included in barcode information of the receipt barcode as read by the fixed scanner 406 or the handy scanner 407. That is, the processor 401 requests transmission of the transaction data by sending the transaction code represented in the receipt barcode as read by the fixed scanner 406 or the handy scanner 407. After receiving the request, the processor 301 extracts, from the transaction database DBA, the transaction data matching the notified transaction code and transmits the transaction data to the gate device 400. In the gate device 400, the processor 401 acquires the transaction data transmitted from the POS server 300 and received by the communication unit 412 as explained above. The processor 401 executes the information processing based on the gate control program PRD, whereby the gate device 400 functions as an acquiring unit.

In ACT 405, the processor 401 checks, based on the transaction data, whether the read receipt barcode is effective (valid) for an exit check performed using the gate device 400. The processor 401 checks whether the receipt barcode matches a predetermined condition and, if the receipt barcode matching the predetermined condition, determines that the receipt barcode is effective. In this context, the condition may be that, for example, the receipt barcode is a valid receipt barcode concerning a settled transaction of a POS terminal 100 installed in the store with the gate device 400 and has not been previously read (used) for passage on a checkout lane LA. However, the condition may be decided as appropriate by the designer or operator of the transaction processing system 1, an administrator of the store, or the like. The valid exit condition may be, for example, only one of the two conditions explained above. Altematively, another condition related to an elapsed time since settlement completion of the transaction related to the receipt barcode being less than a specified time may be added. If the receipt barcode is valid, the processor 401 determines YES and proceeds to ACT 406. Note that, for example, if the exit information included in the transaction data acquired in ACT 404 is in a state representing "not-exited", the processor 401 determines that the receipt barcode has not yet been used for passage through a checkout lane LA.

In ACT 406, the processor 401 checks whether a fraudulent action was detected at the POS terminal 100 of the read receipt barcode. The processor 401 performs this determination based on, for example, the fraud detection information included in the transaction data acquired in ACT 404. The processor 401 executes the information processing based on the gate control program PRD, whereby the gate device 400 functions as a determining unit. The processor 401 identifies a transaction of the customer about to pass through the checkout lane LA by the transaction code included in the barcode information in the receipt barcode as read by the fixed scanner 406 or the handy scanner 407 and functions as a specifying unit.

For example, if the fraud detection information indicates that a fraudulent action was detected, the processor 401 determines YES (a fraudulent action was detected) and proceeds to ACT 407.

Note that, if the processor 401 cannot confirm that the receipt barcode is valid, the processor 401 determines NO in ACT 405 and proceeds to ACT 407 skipping ACT 406.

In ACT 407, the processor 401 executes alarm processing. That is, the processor 401 wams that check by a clerk (an attendant) at the attendant terminal 500 is necessary for the customer about to pass through the checkout lane LA. When the processor 401 determines YES in ACT 406 and proceeds to ACT 407, the warning by the alarm processing will be a warning for urging the attendant to check for the detected fraudulent action. The processor 401 executes the information processing based on the gate control program PRD, whereby the gate device 400 functions as an alarm unit.

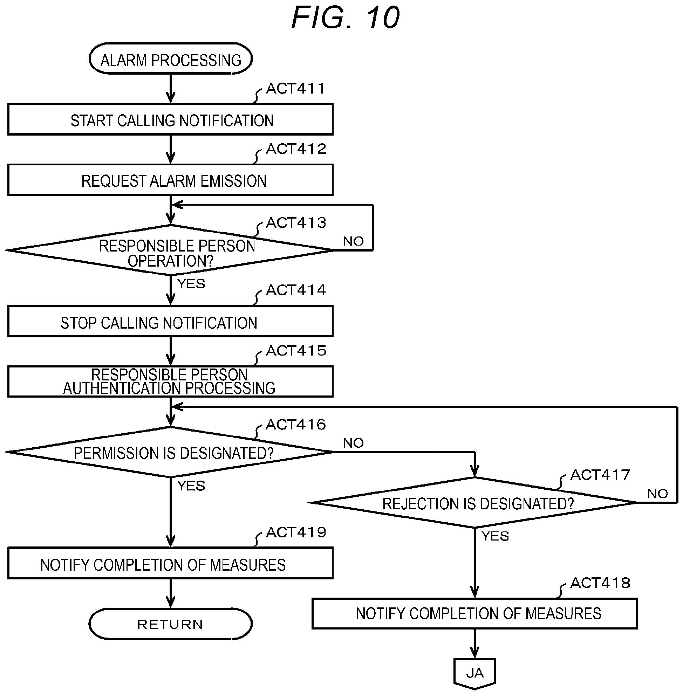

FIG. 10 is a flowchart of the alarm processing.

In ACT 411, the processor 401 starts a calling notification. The calling notification is for informing a customer to wait without passing through the checkout lane LA because a store clerk is being called. For the calling notification, for example, the processor 401 causes the touch panel 404 to display a calling screen. For the calling notification, for example, the processor 401 causes the display unit 405 to display a warning screen. For the calling notification, for example, the processor 401 causes the lamp unit 410 to light or flash in red. For the calling notification, for example, the processor 401 causes the sound unit 411 to output predetermined notification sound. Alternatively, for the calling notification, the processor 401 may cause the touch panel 404, the display unit 405, the lamp unit 410, or the sound unit 411 to perform another operation. For example, the sound unit 411 may output a pre-recorded voice message. However, for the calling notification, the processor 401 may execute only a part of these operations. Accordingly, the customer is discouraged or prevented from passing through the checkout lane LA by the calling notification. That is, the processor 401 executes the information processing based on the gate control program PRD, whereby the gate device 400 functions as a suppressing unit.

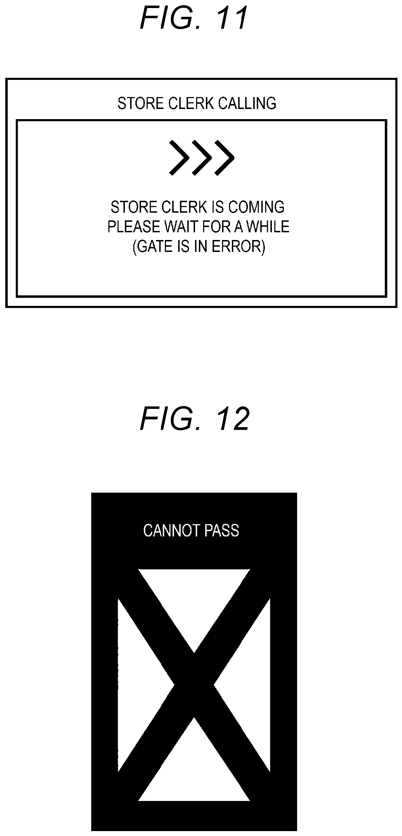

FIG. 11 is a diagram illustrating an example of the calling screen. The calling screen illustrated in FIG. 11 displays a character message for the guidance explained above.

FIG. 12 is a diagram illustrating an example of a warning screen. The warning screen illustrated in FIG. 12 is a screen for warning the customer to prevent the customer from erroneously exiting.

In ACT 412 of FIG. 10, the processor 401 requests a preset request destination to emit an alarm. In the present embodiment, it is assumed that the attendant terminal 500 is set as the alarm request destination.

The attendant terminal 500 is installed, for example, at a service counter or in the checkout region of the store. In some examples, the attendant terminal 500 may perform operations for transaction processing according to the same operations as the operation of an existing type of POS terminal. Accordingly, the attendant terminal 500 can be used for support in a case in which the usual POS terminals 100 are crowded. Additionally, the attendant terminal 500 may be used to handle various atypical requests presented by customers such as the return of previously purchased goods.

In the attendant terminal 500, the processor 501 starts an alarm operation upon receiving the request for the alarm from the gate device 400 as explained above. The alarm operation is for emitting an alarm to the attendant to check a transaction status of a customer about to pass on the checkout lane LA. As the alarm operation, for example, the processor 501 causes the store clerk-side touch panel 504 to display a predetermined alarm screen to indicate which gate device 400 relates to the alarm that was requested. As the alarm operation, the processor 501 may cause the sound unit 513 to output a predetermined alarm sound. Altematively, as the alarm operation, the processor 501 may cause the store clerk-side touch panel 504 or the sound unit 513 to perform another operation, for example, cause the sound unit 513 to output a pre-recorded voice message. However, the processor 501 may execute only a part of these operations as the alarm operation.

In the gate device 400, after requesting the alarm in ACT 412, the processor 401 proceeds to ACT 413.

In ACT 413, the processor 401 waits for operation by the attendant to be started.

The attendant goes to the gate device 400 after the alarm operation at the attendant terminal 500 and addresses the situation according to the surrounding circumstances and information. Accordingly, after such operations as necessary by the attendant (responsible person) have been performed (and indicated as such by the attendant), the processor 401 determines YES in ACT 413 and proceeds to ACT 414.

In ACT 414, the processor 401 stops the calling notification.

In ACT 415, the processor 401 performs authentication processing for confirming that the device operator is actually the attendant. The authentication process may be known processing for operator authentication.

For example, as an operation the attendant may perform in this context, the attendant may be presented a receipt by the customer then perform checking work for comparing transaction content shown on the receipt with the items the customer is about to carry out from the store. If satisfied, the attendant may confirm the operation and, the processor 401 proceeds to ACT 416.

In ACT 416, the processor 401 checks whether a permission for passage was designated. If not, the processor 401 determines NO and proceeds to ACT 417.

In ACT 417, the processor 401 checks whether a rejection of passage was designated. If not, the processor 401 determines NO and retums to ACT 416.

As explained above, in ACT 416 and ACT 417, the processor 401 waits for a permission or a rejection to be designated.

If the attendant finds a fraud as a result of the check work and determines that it is necessary to take some measures against the fraud, the attendant performs an operation for designating a rejection of passage. The attendant takes measures to not allow the customer to pass on the checkout lane LA. For example, the attendant may cure a fraud or mistaken act of the customer by operating the attendant terminal 500 to perform registration and checkout for any unregistered or unpaid items that are found in the check.

After designating of a rejection of passage, the processor 401 determines YES in ACT 417 and proceeds to ACT 418.

In ACT 418, the processor 401 sends notification of the completion of the measures to the attendant terminal 500 when instructed by the attendant or the like. Once this occurs, the processor 401 cancels the gate control targeting the customer and retums to the waiting state in ACT 401 and ACT 402 in FIG. 9.

If determining, as a result of the check work, that the customer can be permitted to immediately pass through the checkout lane LA, the attendant performs an operation for designating the permission of passage. After such operation is performed, the processor 401 determines YES in ACT 416 and proceeds to ACT 419.

In ACT 419, the processor 401 sends notification of the completion of the measures to the attendant terminal 500. Then, the processor 401 ends the current alarm processing.

In the attendant terminal 500, upon receiving the notification of the completion of measures in ACT 418 or ACT 419, the processor 501 stops the alarm operation.

Upon finishing ACT 419 and ending the alarm processing, the processor 401 proceeds to ACT 408 in FIG. 9. Note that, if the fraud detection information included in the transaction data acquired in ACT 404 does not indicate that any fraudulent action was detected, the processor 401 determines NO in ACT 406 and proceeds to ACT 408 skipping ACT 407.

In ACT 408, the processor 501 performs passage permission processing.

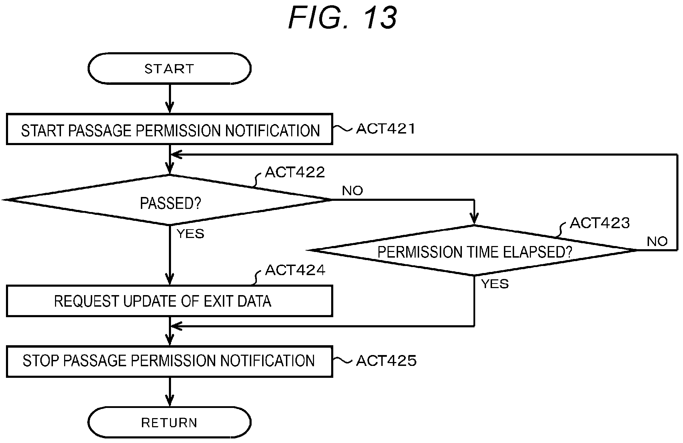

FIG. 13 is a flowchart of the passage permission processing.

In ACT 421, the processor 401 starts a passage permission notification. The passage permission notification permits a customer and people present around the customer to recognize that passage through the checkout lane LA is now permitted for the customer. For the passage permission notification, for example, the processor 401 causes the lamp unit 410 to light in blue. For the passage permission notification, the processor 401 may also or instead causes the sound unit 411 to output a voice message such as "Please pass the gate". Altematively, for the passage permission notification, the processor 401 may cause the lamp unit 410 or the sound unit 411 to perform another operation, for example, cause the sound unit 411 to output predetermined notification sound.

For the passage permission notification, in addition to the above, the processor 401 causes the touch panel 404 to display a first guidance screen. In the passage permission notification, in addition to the above, the processor 401 causes the display unit 405 to display a second guidance screen.

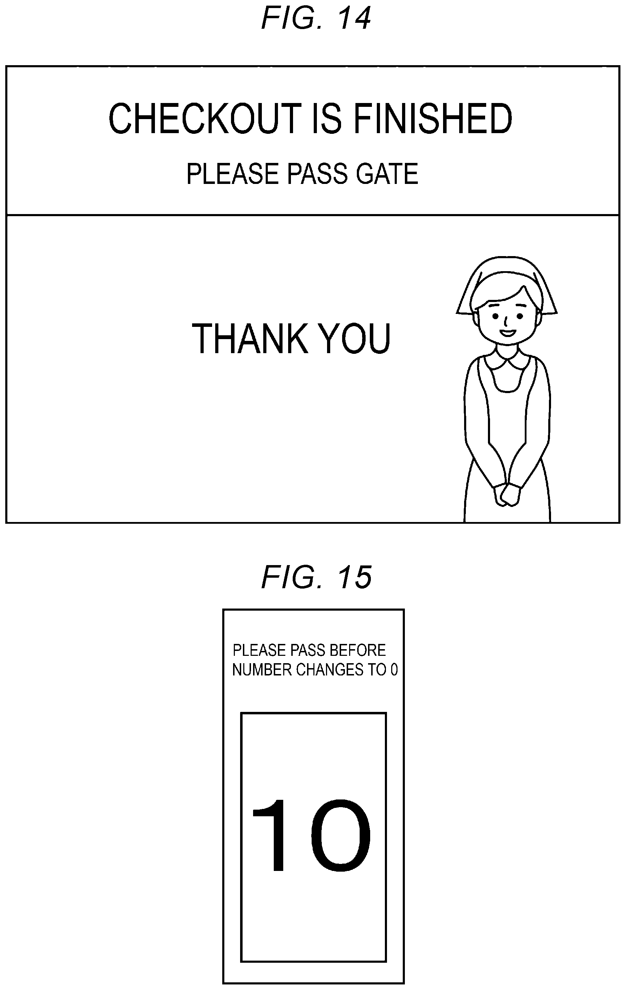

FIG. 14 is a diagram illustrating an example of the first guidance screen.

The first guidance screen illustrated in FIG. 14 includes a message indicating that passage through the checkout lane LA is permitted because checkout was completed.

FIG. 15 is a diagram illustrating an example of a second guidance screen.

The second guidance screen illustrated in FIG. 15 includes a message indicating that there is a limit on the time for which passage on the checkout lane LA is permitted and a number representing the still remaining time may be shown. The second guidance screen illustrated in FIG. 15 is an example in which the remaining time is ten seconds. Concerning the second guidance screen, every time the remaining time changes, the processor 401 updates the remaining time.

With the second guidance screen, it is possible to cause the customer to recognize the remaining time for which passage on the checkout lane LA will be permitted. The customer can determine, based on the screen, whether the customer should quickly pass through the checkout lane LA.

The processor 401 proceeds to ACT 422 when the processor 401 is performing the passage permission notification.

In ACT 422, the processor 401 checks whether a human passed through the checkout lane LA. If not, the processor 401 determines NO and proceeds to ACT 423.

In ACT 423, the processor 401 checks whether the predetermined permission time has elapsed after the passage permission notification was started in ACT 421. If not, the processor 401 determines NO and retums to ACT 422.

In ACT 422 and ACT 423, the processor 401 waits for passage of a human or the elapse of the permission time.

Before the permission time elapses, if the customer passes through the checkout lane LA and, accordingly, passage of a human is detected by the human sensor 409, the processor 401 determines YES in ACT 422 and proceeds to ACT 424.

In ACT 424, as an opportunity for determining YES in ACT 401 in FIG. 9, the processor 401 requests the POS server 300 to update exit data concerning the transaction identified by the transaction code included in the barcode information of the receipt barcode read by the fixed scanner 406 or the handy scanner 407. Upon receiving the request, the processor 301 updates the exit data included in the transaction data in the transaction database DBA to a state representing "exited".

In the gate device 400, upon finishing the request in ACT 424 in FIG. 13, the processor 401 proceeds to ACT 425. Note that, if the permission time elapsed before the processor 401 can confirm that the customer passed through the checkout lane LA, the processor 401 determines YES in ACT 423 and proceeds to ACT 425 skipping ACT 424. For example, the customer sometimes returns to the selling floor or the like without passing through the checkout lane LA even after completion of checkout. In such a case, the processor 401 determines YES in ACT 423.

In ACT 425, the processor 401 stops the passage permission notification. Then, the processor 401 ends the passage permission processing, returns to the waiting state in ACT 401 and ACT 402 in FIG. 9, and prepares for the next customer.

In the waiting state in ACT 401 and ACT 402 in FIG. 9, if the customer passed through the checkout lane LA and the passage is detected by the human sensor 409, the processor 401 determines YES in ACT 402 assuming that the customer passed and proceeds to ACT 409. In ACT 409, the processor 401 executes erroneous passage processing.

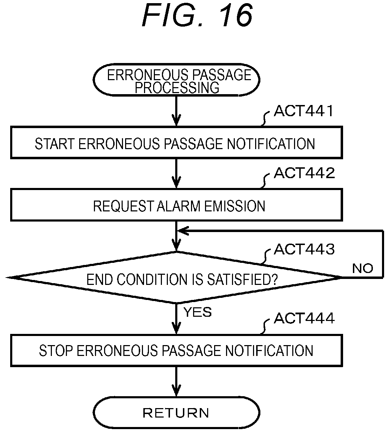

FIG. 16 is a flowchart of the erroneous passage processing. In ACT 441, the processor 401 starts an erroneous passage notification. The erroneous passage notification is to indicate to a customer and people around the customer that the customer attempted to pass through the checkout lane LA without permission. For the erroneous passage notification, the processor 401 may cause the touch panel 404 to display a first warning screen. For the erroneous passage notification, the processor 401 may cause the display unit 405 to display a second warning screen. For the erroneous passage notification, the processor 401 may cause the lamp unit 410 to light or flash in red. For the erroneous passage notification, the processor 401 may cause the sound unit 411 to output a predetermined alarm sound. Alternatively, for the erroneous passage notification, the processor 401 may cause the touch panel 404, the display unit 405, the lamp unit 410, or the sound unit 411 to perform another operation, for example, cause the sound unit 411 to output a pre-recorded voice message. However, for the erroneous passage notification, the processor 401 may execute only a part of these operations.

The first warning screen is, for example, a screen indicating, with a text message or an illustration, that passage is not permitted. The second warning screen is, for example, the same screen as the warning screen illustrated in FIG. 12.

In ACT 442 in FIG. 16, the processor 401 requests a preset request destination to emit an alarm. In the present embodiment, it is assumed that the attendant terminal 500 is preset as the request destination for the alarm emission.

In the attendant terminal 500, upon receiving the request for the alarm emission from the gate device 400, the processor 501 starts alarm emission processing. The alarm emission processing is processing for emitting an alarm for indicating a fraudulent or erroneous passage through the checkout lane LA to a store clerk who is in charge of monitoring using the attendant terminal 500. For the alarm emission processing, the processor 501 causes the store clerk-side touch panel 504 to display a screen for causing the store clerk to recognize that a potentially fraudulent passage was performed. For the alarm emission processing, the processor 501 causes the sound unit 513 to output predetermined alarm sound. Altematively, for the alarm emission processing, the processor 501 may cause the store clerk-side touch panel 504 or the sound unit 513 to perform another operation, for example, cause the sound unit 513 to output a pre-recorded voice message. However, for the alarm emission processing, the processor 501 may execute only a part of these operations.

The processor 501 waits for an alarm emission release condition to be satisfied while performing the alarm emission processing. The release condition may be decided as appropriate by a system designer or operator of the transaction processing system 1 or the administrator of the attendant terminal 500. The release condition may be that a release was instructed via the store clerk-side touch panel 504 or the keyboard 505. Alternatively, the release condition may be that the alarm emission processing exceeded a predetermined length of time. Once the release condition is satisfied, the processor 501 stops the alarm emission processing.

In the gate device 400, after requesting the alarm emission in ACT 442, the processor 401 proceeds to ACT 443.

In ACT 443, the processor 401 waits for an end condition to be satisfied. The end condition may be decided as appropriate. The end condition may assumed to be that a continuation time of the erroneous passage notification exceeded a predetermined time. Altematively, the release condition may be a release instruction was performed at the attendant terminal 500. In this case, in the attendant terminal 500, the processor 501 notifies the gate device 400 that a release instruction was performed. Altematively, the end condition may be that the store clerk was performed a release operation at the gate device 400. Once the end condition is satisfied, the processor 401 determines YES and proceeds to ACT 444.

In ACT 444, the processor 401 stops the erroneous passage notification. Then, the processor 401 ends the current erroneous passage processing and retums to the waiting state in ACT 401 and ACT 402 in FIG. 9.

As explained above, in the transaction processing system 1, even if a fraudulent action is detected by the action monitoring system 200 during the transaction processing in the POS terminal 100, the transaction processing in the POS terminal 100 continues without being suspended. The POS terminal 100 includes, in the transaction data stored in the POS server 300, fraud detection information indicating that the fraudulent action was detected. The gate device 400 emits an alarm when confirming, based on the fraud detection information, that a fraudulent action was detected in the transaction processing of the customer about to pass through the checkout lane LA. Accordingly, even if a fraudulent action is performed, the transaction processing in the POS terminal 100 for the customer is not necessarily directly ended. Therefore, the attendant (clerk) does not need to rush to the POS terminal 100 every time a fraudulent action of a customer in the POS terminal 100 is detected. The burden on a clerk in charge can thus be reduced.

Various modified implementations of the embodiment described below are possible.

Registration of a transaction commodity may be performed by the customer using an information terminal (e.g., a smartphone) or any other information processing device (e.g., a cart-based POS terminal) on the selling floor. Note that, in this case, fraud detection of an action of the customer may be desirably performed based on, for example, images respectively obtained by a large number of cameras distributed around the selling floor.

The functions of the processing unit may be implemented by information processing in any information processing device such as the POS terminal 100 or the POS server 300.

The functions of the detecting unit may be implemented by information processing in any information processing device such as the POS terminal 100.

The functions of the specifying unit may be implemented by information processing in any information processing device other than the gate device 400 based on information acquired by the gate device 400.

For specifying a transaction of a customer about to pass through the checkout lane LA, member codes or the like for identifying customers may be correlated with individual transactions and the transaction may be specified by member code acquired by the gate device 400. Alternatively, biological authentication data of customers may be correlated with the transactions and the transaction may be specified via biological authentication data acquired by the gate device 400.

The functions of the determining unit may be implemented by information processing in any information processing device such as the POS server 300.

The functions of the alarm unit may be implemented by information processing in any information processing device such as the attendant terminal 500.

The management (tracking) of the exit status of the customer for each of the transactions need not be performed in all examples.

An original or a copy of the transaction database DBA may be stored in the auxiliary storage unit 403 in the gate device 400. That is, in this case, the storage unit is provided in the gate device 400. The transaction database DBA may be stored in a storage device provided in any information processing device different from the gate device 400 and the POS server 300. The transaction database DBA may be stored in independent storage devices externally attached to various information processing devices.

The gate device 400 may additionally include the functions of a checkout machine (payment kiosk). The gate device 400 may perform, for example, processing for checkout of a transaction commodity registered according to operation of a customer in an information terminal on a selling floor.

The suppressing unit may include a mechanism that can selectively form a state in which the checkout lane LA is physically blocked and a state in which the checkout lane LA is not blocked.

The POS terminal 100 may perform processing for registering a transaction commodity. The gate device 400 may perform processing for checkout (settlement).

A part or all of functions implemented by processors with information processing can also be implemented by dedicated hardware that executes information processing without a software program such as a logic circuit. Each of the functions explained above can also be implemented by combining software control with the hardware such as the logic circuit explained above.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. A transaction processing system (1), comprising:
a point-of-sale apparatus (100) configured to process the registration of items in a sales transaction of a customer at a store;
a monitoring system (200) configured to detect fraud acts of the customer in the sales transaction; and
a gate device (400) on an exit lane on which a customer passes after finishing the sales transaction in a store, wherein
transaction data generated for the sales transaction indicates whether the monitoring system has detected a fraud act of the customer in the sales transaction, and
the gate device is configured to:
identify the sales transaction of the customer about to pass through the exit lane,
determine whether the transaction data indicates that the monitoring system has detected at least one fraud act in the identified sales transaction, and
cause an alarm notification to be output when the transaction data indicates the monitoring system has detected at least one fraud act in the identified sales transaction.

2. The transaction processing system according to claim 1, wherein
the point-of-sale apparatus send the transaction data to a point-of-sale server, and
the monitoring system sends notifications of fraud acts in the sales transaction to the point-of-sale server to be included in the transaction data.

3. The transaction processing system according to claim 1 or 2, wherein the gate device includes:
a code reader at an entrance of the exit lane, and
the gate device identifies the sales transaction of the customer by the code reader reading a code presented by the customer about to pass through the exit lane.

4. The transaction processing system according to claim 3, wherein the code reader is a barcode scanner.

5. The transaction processing system according to any one of claims 1 to 4, wherein the point-of-sale apparatus is configured to issue a sales receipt for the sales transaction including a transaction identification code.

6. The transaction processing system according to any one of claims 1 to 5, wherein the monitoring system includes a camera positioned to image the customer at the point-of-sale apparatus .

7. The transaction processing system according to any one of claims 1 to 6, wherein the monitoring system is configured to receive point-of-sale event data from the point-of-sale apparatus .

8. The transaction processing system according to any one of claims 1 to 7, further comprising:
an attendant terminal configured to receive the alarm notification from the gate device.

9. The transaction processing system according to any one of claims 1 to 8, wherein the gate device includes an alarm unit which outputs an alarm notice at the gate device when the alarm notification is output.

10. The transaction processing system according to any one of claims 1 to 9, wherein
the gate device includes a sensor to detect passage of a person through the exit lane, and
the gate device is configured to cause an alarm notification to be output when the customer attempts to pass through the exit lane without presenting a valid sales receipt for the sale transaction.

11. The transaction processing system according to any one of claims 6 to 10, wherein:
the point-of-sale apparatus is a point-of-sale terminal configured to process the registration of items in a sales transaction of a customer at a store and provide a sales receipt including a transaction identification code upon settlement of the sales transaction;
the camera is positioned to image the customer at the point-of-sale terminal during the sales transaction;
the monitoring system is a monitoring device connected to the camera and the point-of-sale terminal and configured to detect fraud acts of the customer in the sales transaction based on images of the customer at the point-of-sale terminal and point-of-sale event data from the point-of-sale terminal;
the transaction processing system further comprises a point-of-sale server connected to the point-of-sale terminal and configured to receive transaction data for the sales transaction from the point-of-sale terminal and indications of a detected fraud act from the monitoring device and update the transaction data to indicate whether a fraud act has been detected in the sales transaction;
and wherein
the gate device is configured to:
read the transaction identification code from the sales receipt when presented by the customer about to pass through the exit lane,
send the transaction identification code to the point-of-sale server,
determine whether the transaction data associated with the transaction identification code indicates that the monitoring device has detected at least one fraud act in the identified sales transaction, and
cause an alarm notification to be output when the transaction data indicates the monitoring device has detected at least one fraud act in the identified sales transaction.

12. The transaction processing system according to claim 11, wherein the gate device includes:
a code reader at an entrance of the exit lane, and
the code reader reads the transaction identification code of the customer by using the code reader, preferably wherein the code reader is a barcode scanner.

13. Agate device for a transaction processing system of any one of claims 1 to 12 for retail stores, the gate device comprising:
a communication interface connectable to a network;
a code reader to read a transaction identification code from a sale receipt when present by a customer about to pass through an exit lane adj acent to the gate device;
an alarm unit to output an alarm notice at the gate device; and
a processor configured to:
receive the transaction identification code from the code reader,
send the transaction identification code to a point-of-sale server via the communication interface over the network,
determine whether transaction data associated with the transaction identification code in the point-of-sale server indicates whether at least one fraud act has been detected in the identified sales transaction, and
cause an alarm notification to be output to the alarm unit when the transaction data indicates at least one fraud act has been detected in the identified sales transaction.

14. The gate device according to claim 13, further including:
a sensor to detect passage of a person through the exit lane.

15. The gate device according to claim 13 or 14, wherein the processor is further configured to:
cause an alarm notification to be output when the customer attempts to pass through the exit lane without first presenting a valid sales receipt for the sale transaction, and/or wherein the code reader is a barcode reader.
